# EUROPEAN PATENT APPLICATION

(11) **EP 2 799 679 A1**
(43) Date of publication of application: **05.11.2014**
(21) Application number: 14166222.1
(22) Date of filing: 28.04.2014
(51) Int. Cl.: F01N 3/20

(54) **Diesel exhaust fluid control system**

(30) Priority: 03.05.2013 US 201313887074
(71) Applicant: DEERE & COMPANY, Moline, Illinois 61265-8098 (US)
(72) Inventor: Tuken, Taner, Cedar Falls, IA Iowa 50613 (US); Bovee, Nathan A, Cedar Falls, IA Iowa 50613 (US); Pipho, Michael J, Dunkerton, IA Iowa 50626 (US); Schmitt, Josh C, Waterloo, IA Iowa 50701 (US)
(74) Representative: Lange, Robert

(57) **Abstract**

An engine (106) has an exhaust gas system and a reductant delivery system. The reductant delivery system includes a pump which pumps reductant from a tank (148) an injector (158) which injects reductant into the exhaust gas, and a heater (130) for heating the reductant in the tank (148). A control system includes an ECU (115) which controls the pump, the injector and the heater as a function of sensed temperatures.

## Description

The present disclosure relates to a control system which controls a Diesel Exhaust Fluid (DEF) system which is part of a selective catalytic reduction (SCR) system. DEF solutions are used as the reductant in engine SCR systems. Some DEF solutions will freeze at lower temperatures. When frozen, DEF injection cannot be started and regulations allow for only a limited time to thaw and make a DEF system operational. Current DEF thawing systems have time-based thawing algorithms which heats the DEF for a specific time based on ambient temperature, tank level, and other variables. Such thawing systems would require significant calibration efforts on each different application. It would be desirable to have a system to thaw and control the DEF system which would operate in a wide variety of applications with a relatively low calibration effort.

According to an aspect of the present disclosure, an engine includes an exhaust gas system and a reductant delivery system. The reductant delivery system has an injector which injects the reductant into the exhaust gas, a DEF pump for supplying reductant from a reductant tank to the injector, and a heater for heating the reductant in the tank. An electronic control unit is programmed to determine when to turn on and off the heater based on the sensed tank temperature, and also when to start the DEF pump to recirculate the DEF to enhance thawing of the tank. The ECU can place the system in different control states, including a Defrost state, a Recirculation state, a Heat state, a Warm Tank state and an Idle state.

Upon initialization, the ECU puts the system in the idle state. The system remains in this state until a decision is made (by other system features) regarding whether all the DEF system components are considered defrosted. If defrosting is not needed, then the state machine directly jumps to the warm tank state. Otherwise, it transitions to the tank defrosting state. DEF tank heating, DEF pump, and DEF dosing are all disabled in the idle state.

In the tank defrosting state, a heater is turned on. DEF pumping and DEF dosing (injecting) are still not allowed in this state, since not enough DEF is thawed yet to start pumping. When defrosting is complete, then the ECU recirculates DEF while DEF dosing is still not allowed. There is a significant DEF recirculation in and out of the tank during the pump operation. This helps mixing, improves the heat transfer, and accelerates the DEF defrosting in the tank.

After recirculation, the tank heater is turned off. Normal DEF pumping/dosing operation is continued indefinitely in this state. The DEF tank temperature is monitored continuously, and if it drops below a certain threshold, then the tank heater is turned on again. In any state, if a DEF heating system abort request (from a heating coordinator feature) becomes true or when the engine is turned off, then the system returns to the idle state.

If the ignition key is cycled during in warm ambient conditions, the ECU maintains the DEF system in the warm tank state all the time. In cold initial ambient conditions where defrosting the tank is needed, the ECU converts the DEF system, in order, from idle to tank thawing and to recirculation state. After that the ECU cycles the DEF system back and forth between the tank heating and the warm tank states.
Fig. 1 is a schematic illustration of a power system including an exhaust system embodying the invention; and
Fig. 2 illustrates the relationships of Figs. 2A-2C with each other; and
Figs. 2A-2C is a flow chart of an algorithm performed by the electronic control unit of Fig. 1.

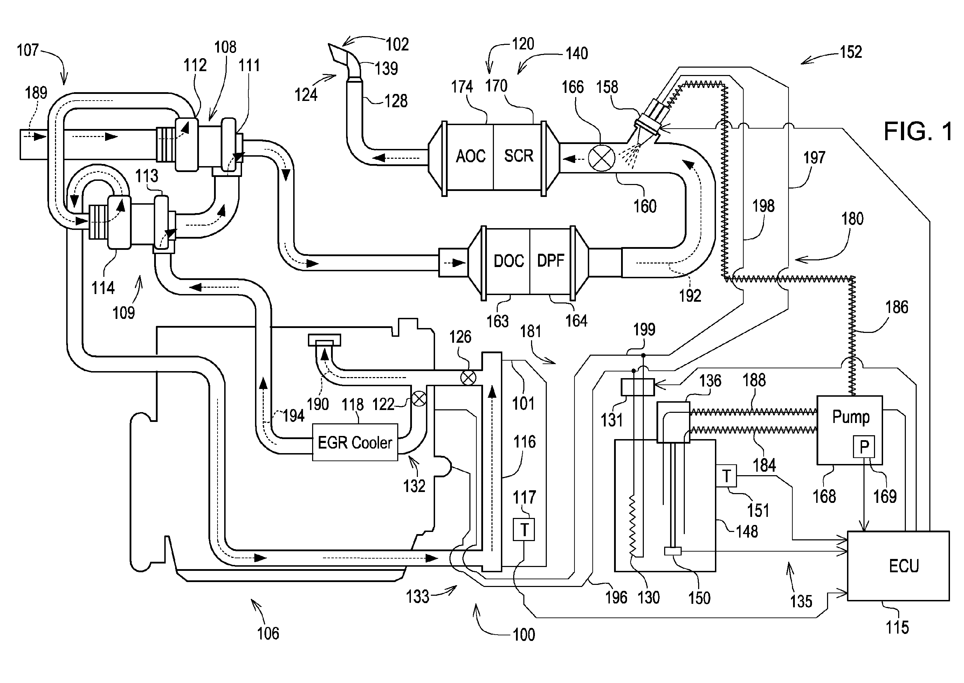

Referring to Fig. 1, a power system 100 includes an engine 106. The power system 100 may be used for providing power to a variety of machines, including on-highway trucks, construction vehicles, marine vessels, stationary generators, automobiles, agricultural vehicles, and recreation vehicles.

The engine 106 may be any kind of engine 106 that produces an exhaust gas, the exhaust gas being indicated by directional arrow 192. For example, engine 106 may be an internal combustion engine, such as a gasoline engine, a diesel engine, a gaseous fuel burning engine (e.g., natural gas) or any other exhaust gas producing engine. The engine 106 may be of any size, with any number cylinders (not shown), and in any configuration (e.g., "V," inline, and radial). Although not shown, the engine 106 may include various sensors, such as temperature sensors, pressure sensors, and mass flow sensors.

The power system 100 may include an intake system 107. The intake system 107 may include components configured to introduce a fresh intake gas, indicated by directional arrow 189, into the engine 106. For example, the intake system 107 may include an intake manifold (not shown) in communication with the cylinders, a compressor 112, a charge air cooler 116, and an air throttle actuator 126. The power system 100 also includes a conventional radiator 101 for cooling engine coolant and a coolant temperature sensor 117.

The compressor 112 may be a fixed geometry compressor, a variable geometry compressor, or any other type of compressor configured to receive the fresh intake gas, from upstream of the compressor 112. The compressor 112 compress the fresh intake gas to an elevated pressure level. As shown, the charge air cooler 116 is positioned downstream of the compressor 112, and it is configured to cool the fresh intake gas. The air throttle actuator 126 may be positioned downstream of the charge air cooler 116, and it may be, for example, a flap type valve controlled by an electronic control unit (ECU) 115 to regulate the air-fuel ratio.

Further, the power system 100 may include an exhaust system 140. The exhaust system 140 may include components configured to direct exhaust gas from the engine 106 to the atmosphere. Specifically, the exhaust system 140 may include an exhaust manifold (not shown) in fluid communication with the cylinders. During an exhaust stroke, at least one exhaust valve (not shown) opens, allowing the exhaust gas to flow through the exhaust manifold and a turbine 111. The pressure and volume of the exhaust gas drives the turbine 111, allowing it to drive the compressor 112 via a shaft (not shown). The combination of the compressor 112, the shaft, and the turbine 111 is known as a turbocharger 108.

The power system 100 may also include, for example, a second turbocharger 109 that cooperates with the turbocharger 108 (i.e., series turbocharging). The second turbocharger 109 includes a second compressor 114, a second shaft (not shown), and a second turbine 113. Exemplarily, the second compressor 114 may be a fixed geometry compressor, a variable geometry compressor, or any other type of compressor configured to receive the fresh intake flow, from upstream of the second compressor 114, and compress the fresh intake flow to an elevated pressure level before it enters the engine 106.

The power system 100 may also includes an exhaust gas recirculation (EGR) system 132 that is configured to receive a recirculated portion of the exhaust gas, as indicated by directional arrow 194. The intake gas is indicated by directional arrow 190, and it is a combination of the fresh intake gas and the recirculated portion of the exhaust gas. The EGR system 132 includes an EGR valve 122, an EGR cooler 118, and an EGR mixer (not shown).

The EGR valve 122 may be a vacuum controlled valve, allowing a specific amount of the recirculated portion of the exhaust gas back into the intake manifold. The EGR cooler 118 is configured to cool the recirculated portion of the exhaust gas flowing therethrough. Although the EGR valve 122 is illustrated as being downstream of the EGR cooler 118, it could also be positioned upstream from the EGR cooler 118. The EGR mixer is configured to mix the recirculated portion of the exhaust gas and the fresh intake gas into, as noted above, the intake gas.

As further shown, the exhaust system 140 may include an aftertreatment system 120, and at least a portion of the exhaust gas passes therethrough. The aftertreatment system 120 is configured to remove various chemical compounds and particulate emissions present in the exhaust gas received from the engine 106. After being treated by the exhaust aftertreatment system 120, the exhaust gas is expelled into the atmosphere via a tailpipe 178.

In the illustrated embodiment, the exhaust aftertreatment system 120 includes a diesel oxidation catalyst (DOC) 163, a diesel particulate filter (DPF) 164, and a selective catalytic reduction (SCR) system 152. The SCR system 152 includes a first reductant or DEF delivery system 135, an SCR catalyst 170, and an ammonia oxidation catalyst (AOC) 174. Exemplarily, the exhaust gas flows through the DOC 163, the DPF 164, the SCR catalyst 170, and the AOC 174, and is then, as just mentioned, expelled into the atmosphere via the tailpipe 178.

In other words, in the embodiment shown, the DPF 164 is positioned downstream of the DOC 163, the SCR catalyst 170 downstream of the DPF 164, and the AOC 174 downstream of the SCR catalyst 170. The DOC 163, the DPF 164, the SCR catalyst 170, and the AOC 174 may be coupled together. Exhaust gas treated, in the aftertreatment system 120, and released into the atmosphere contains significantly fewer pollutants - such as diesel particulate matter, NO2, and hydrocarbons - than an untreated exhaust gas.

The DOC 163 may be configured in a variety of ways and contain catalyst materials useful in collecting, absorbing, adsorbing, and/or converting hydrocarbons, carbon monoxide, and/or oxides of nitrogen contained in the exhaust gas. Such catalyst materials may include, for example, aluminum, platinum, palladium, rhodium, barium, cerium, and/or alkali metals, alkaline-earth metals, rare-earth metals, or combinations thereof. The DOC 163 may include, for example, a ceramic substrate, a metallic mesh, foam, or any other porous material known in the art, and the catalyst materials may be located on, for example, a substrate of the DOC 163. The DOC(s) may also be configured to oxidize NO contained in the exhaust gas, thereby converting it to N02. Or, stated slightly differently, the DOC 163 may assist in achieving a desired ratio of NO to NO2 upstream of the SCR catalyst 170.

The DPF 164 may be any of various particulate filters known in the art configured to reduce particulate matter concentrations, e.g., soot and ash, in the exhaust gas to meet requisite emission standards. Any structure capable of removing particulate matter from the exhaust gas of the engine 106 may be used. For example, the DPF 164 may include a wall-flow ceramic substrate having a honeycomb cross-section constructed of cordierite, silicon carbide, or other suitable material to remove the particulate matter. The DPF 164 may be electrically coupled to a controller, such as the ECU 115, that controls various characteristics of the DPF 164.

If the DPF 164 were used alone, it would initially help in meeting the emission requirements, but would quickly fill up with soot and need to be replaced. Therefore, the DPF 164 is combined with the DOC 163, which helps extend the life of the DPF 164 through the process of regeneration. The ECU 115 may be configured to measure the PM build up, also known as filter loading, in the DPF 164, using a combination of algorithms and sensors. When filter loading occurs, the ECU 115 manages the initiation and duration of the regeneration process.

Moreover, the delivery system 135 may include a reductant tank 148 configured to store the reductant. One example of a reductant is a solution having 32.5% high purity urea and 67.5% de-ionized water (e.g., DEF), which decomposes as it travels through a decomposition tube 160 to produce ammonia. Such a reductant may begin to freeze at approximately 12 deg F (-11 deg C). If the reductant freezes when a machine is shut down, then the reductant may need to be thawed before the SCR system 152 can function.

The reductant delivery system 135 may include a reductant header 136 mounted to the reductant tank 148, the reductant header 136 further comprising, in some embodiments, a level sensor 150 configured to measure a quantity of the reductant in the reductant tank 148. The level sensor 150 may include a float configured to float at a liquid/air surface interface of reductant included within the reductant tank 148. Other implementations of the level sensor 150 are possible, and may include, exemplarily, one or more of the following: (a) using one or more ultrasonic sensors; (b) using one or more optical liquid-surface measurement sensors; (c) using one or more pressure sensors disposed within the reductant tank 148; and (d) using one or more capacitance sensors. A temperature sensor 151 senses the temperature of the reductant.

The reductant header 136 includes a tank heating element 130 that is configured to receive coolant from the engine 106, and the power system 100 may include a cooling system 133 that includes a coolant supply passage 180 and a coolant return passage 181. Optionally, the sensor 151 may be part of the header 136. A first segment 196 of the coolant supply passage 180 is positioned fluidly between the engine 106 and the tank heating element 130 and is configured to supply coolant to the tank heating element 130. The coolant circulates, through the tank heating element 130, so as to warm the reductant in the reductant tank 148, therefore reducing the risk that the reductant freezes therein. In an alternative embodiment, the tank heating element 130 may, instead, be an electrically resistive heating element. A coolant heater control valve 131 controls communication of coolant between passages 196, 199 and the heater 130.

A second segment 197 of the coolant supply passage 180 is positioned fluidly between the tank heating element 130 and a reductant delivery mechanism 158 and is configured to supply coolant thereto. The coolant heats the reductant delivery mechanism 158, reducing the risk that reductant freezes therein.

A first segment 198 of the coolant return passage 181 is positioned between the reductant delivery mechanism 158 and the tank heating element 130, and a second segment 199 of the coolant return passage 181 is positioned between the engine 106 and the tank heating element 130. The first segment 198 and the second segment 199 are configured to return the coolant to the engine 106.

The decomposition tube 160 may be positioned downstream of the reductant delivery mechanism or injector 158 but upstream of the SCR catalyst 170. The reductant delivery mechanism 158 may be, for example, an injector that is selectively controllable to inject reductant directly into the exhaust gas. As shown, the SCR system 152 may include a reductant mixer 166 that is positioned upstream of the SCR catalyst 170 and downstream of the reductant delivery mechanism 158. The reductant delivery system 135 may additionally include a reductant pressure source (not shown) and a reductant extraction passage 184. The reductant extraction passage 184 may be coupled fluidly to the reductant tank 148 and the reductant pressure source therebetween. Exemplarily, the reductant extraction passage 184 is shown extending into the reductant tank 148, though in other embodiments the reductant extraction passage 184 may be coupled to an extraction tube via the reductant header 136. The reductant delivery system 135 may further include a reductant supply module or pump 168, and it may include the reductant pressure source. Exemplarily, the reductant pump 168 may be, or be similar to, a Bosch reductant supply module, such as the one found in the "Bosch Denoxtronic 2.2 - Urea Dosing System for SCR Systems." Such a pump includes a built-in pressure sensor 169.

The reductant delivery system 135 may also include a reductant dosing passage 186 and a reductant return passage 188. The reductant return passage 188 is shown extending into the reductant tank 148, though in some embodiments of the power system 100, the reductant return passage 188 may be coupled to a return tube via the reductant header 136.

The reductant delivery system 135 may include, among other things, valves, orifices, sensors, and pumps positioned in the reductant extraction passage 184, reductant dosing passage 186, and reductant return passage 188.

As mentioned above, one example of a reductant is a solution having 32.5% high purity urea and 67.5% de-ionized water (e.g., DEF), which decomposes as it travels through the decomposition tube 160 to produce ammonia. The ammonia reacts with NOₓ in the presence of the SCR catalyst 170, and it reduces the NOₓ to less harmful emissions, such as N2 and H2O. The SCR catalyst 170 may be any of various catalysts known in the art. For example, in some embodiments, the SCR catalyst 170 may be a vanadium-based catalyst. But in other embodiments, the SCR catalyst 170 may be a zeolite-based catalyst, such as a Cu-zeolite or a Fe-zeolite.

The AOC 174 may be any of various flow-through catalysts configured to react with ammonia to produce mainly nitrogen. Generally, the AOC 174 is utilized to remove ammonia that has slipped through or exited the SCR catalyst 170. As shown, the AOC 174 and the SCR catalyst 170 may be positioned within the same housing. But in other embodiments, they may be separate from one another.

The power system 100 also includes an intake system 107. The intake system 107 may include components configured to introduce a fresh intake gas, indicated by directional arrow 189, into the engine 106. For example, the intake system 107 may include an intake manifold (not shown) in communication with the cylinders, a compressor 112, a charge air cooler 116, and an air throttle actuator 126.

The ECU 115 also receives information from the reductant level sensor 150, the reductant temperature sensor 151 and from the coolant temperature sensor 117. As a function of these inputs, the ECU 115 controls the heater control valve 131 and the pump 168. Optionally, the functions of ECU 115 and 161 may be combined into a single ECU, if desired.

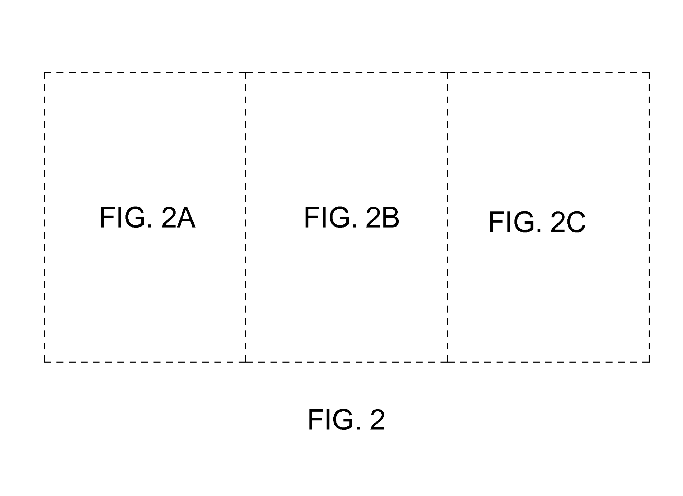

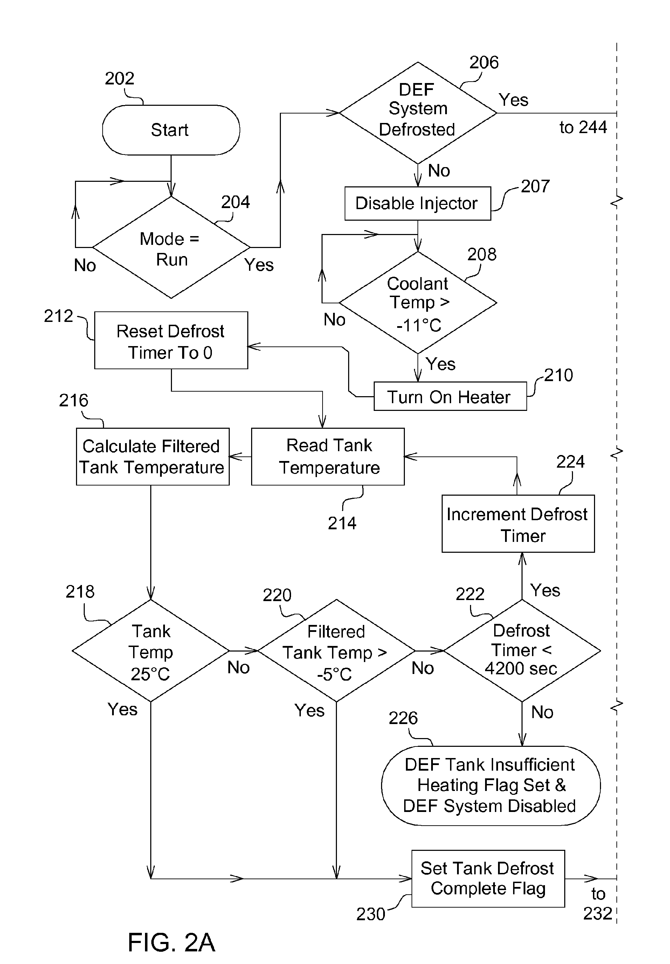

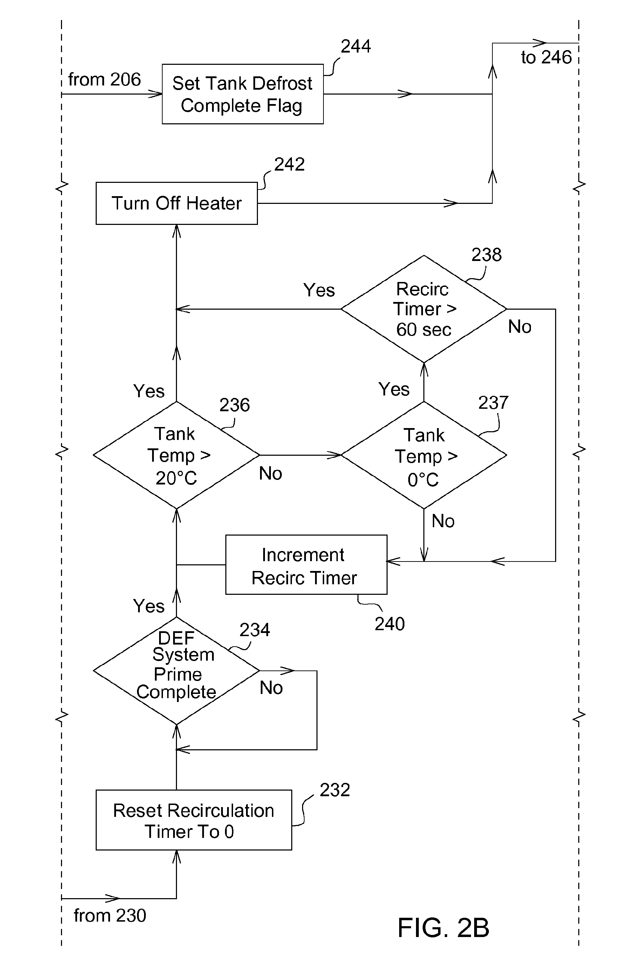

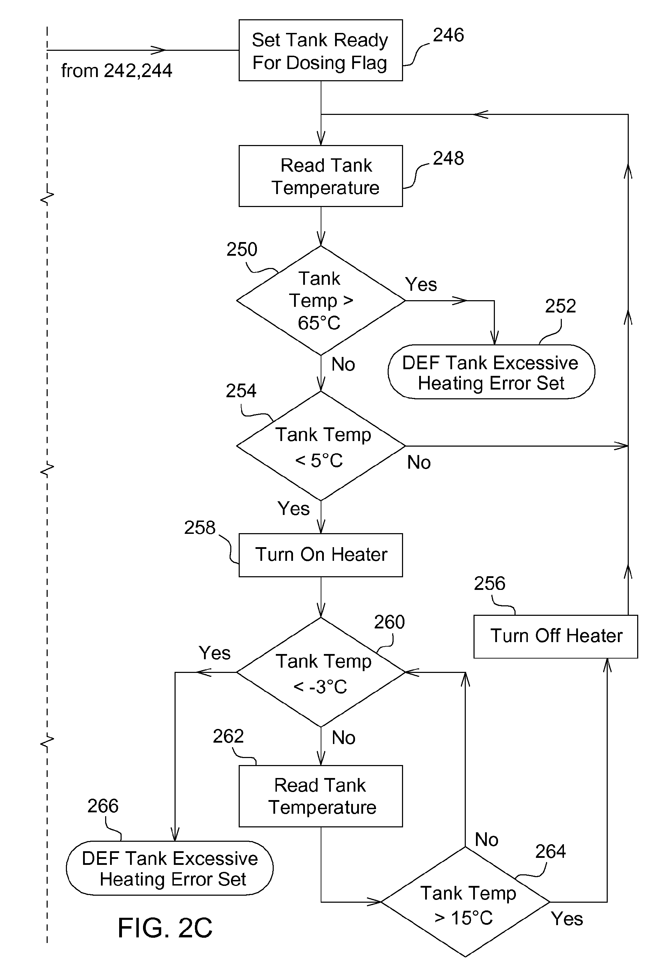

Referring now to Figs. 2A-2C, the ECU 115 executes the algorithm 200 shown therein. The algorithm 200 starts at step 202, where initially, the injector 158, the heater 130 and the pump 168 are off. Then, step 204 directs the algorithm to step 208 if the engine 106 is running, else step 204 directs the algorithm back to step 204.

Then, step 206 directs the algorithm to step 244 if the DEF system should be defrosted, else step 206 directs the algorithm to step 208. Step 208 directs the algorithm to step 210 if the coolant temperature (sensed by sensor 117) is above a threshold (such as 11 degrees C), else step 208 directs the algorithm back to step 208.

Step 206 determines whether the DEF tank 148 should be defrosted by monitoring temperature readings when the vehicle ignition key (not shown) is activated. Once step 206 determines that tank 148 should be defrosted, then step 208 allows step 210 to turn on the heater 130 only after the coolant temperature is higher than a low threshold (e.g. -11 deg C).

Step 210 puts the system in a defrost mode and turns on the DEF heater 130.

Then step 212 resets a defrost timer to zero.

Next, step 214 reads the DEF tank temperature from sensor 151.

Then, step 216 calculates a filtered tank temperature. For this purpose, the ECU 115 uses a conventional first order filtering process (not shown) in order to avoid noise or rapid fluctuations in the sensed signal and to slow down the DEF signal. Step 218 directs the algorithm to step 220 if the DEF tank temperature is above 25 degrees C, else step 218 directs the algorithm to step 230.

Step 220 directs the algorithm to step 222 if the filtered DEF tank temperature is above -5 degrees C, else step 220 directs the algorithm to step 230.

Step 222 directs the algorithm to step 224 if the defrost timer is less than 4200 seconds, else step 222 directs the algorithm to step 226.

Step 224 increments the defrost timer and returns the algorithm to step 214.

Step 226 sets a DEF tank insufficient heating error flag and a DEF system disabled flag.

Step 230 sets a DEF tank defrost complete flag and directs the algorithm to step 232.

Step 232 resets a recirculation timer and directs the algorithm to step 234.

Step 234 directs the algorithm to step 236 if a DEF system prime operation is complete, else step 234 directs the algorithm back to step 234. Prime operation is determined to be complete if the DEF pump pressure sensed by pressure sensor 169 is stable and above a predetermined threshold, if the DEF lines 184, 186 and 188 are defrosted (determined by another operation - not shown), and if a DEF pump defrost operation is complete (also determined by another operation - not shown).

Step 236 directs the algorithm to step 237 if the DEF tank temperature is not above 20 degrees C, else step 236 directs the algorithm to step 242.

Step 237 directs the algorithm to step 238 if the DEF tank temperature is above 0 degrees C, else step 237 directs the algorithm to step 240.

Step 238 directs the algorithm to step 242 if the recirculation timer is greater than 60 seconds, else step 238 directs the algorithm to step 240.

Step 240 increments the recirculation timer and returns the algorithm to step 236. Step 242 turns off the DEF heater 130 and directs the algorithm to step 246.

To summarize, steps 236-242 operate as follows. Before turning off the heater 130, the ECU ensures that the system would spend at least 60 seconds (recirculation time limit) with the DEF temperature above T>0 deg C, or T > 20 deg C. During this time, the pump 168 is turned on, but the DEF injector 158 is turned off. This causes a continuous recirculation flow, which increases the heat transfer from the engine coolant in the heater 130 into the DEF, and increases the amount of liquid DEF available in the tank for DEF injection. If this action is not taken, then the consequence is that there may be only a small amount of liquid DEF in the tank, which would be quickly consumed by the DEF injections. If an empty space develops adjacent to the heater 130, then that would decrease the heat transfer significantly, and liquid DEF injection could not be sustained.

Step 244 sets a DEF tank defrost complete flag and directs the algorithm to step 246.

Step 246 sets a DEF tank ready for Dosing flag and directs the algorithm to step 248. This means that the reductant is in condition to be injected into the exhaust by injector 158.

Step 248 reads the DEF tank temperature and directs the algorithm to step 250. Step 250 directs the algorithm to step 252 if the DEF tank temperature is greater than 65 degrees C, else step 250 directs the algorithm to step 254.

Step 252 sets a DEF tank excessive heating error flag.

Step 254 directs the algorithm to step 256 if the DEF tank temperature is not less than 5 degrees C, else step 254 directs the algorithm to step 258.

Step 256 turns off the DEF tank heater 130.

Step 258 turns on the DEF tank heater 130 and directs the algorithm to step 260. Step 260 directs the algorithm to step 266 if the DEF tank temperature is less than - 3 degrees C, else step 260 directs the algorithm to step 262.

Step 262 reads the DEF tank temperature and directs the algorithm to step 264. Step 264 directs the algorithm back to step 256 if the DEF tank temperature is greater than 15 degrees C, else step 264 directs the algorithm back to step 260. Step 266 sets a DEF tank insufficient heating error flag.

The conversion of the above flow chart into a standard language for implementing the algorithm described by the flow chart in a digital computer or microprocessor, will be evident to one with ordinary skill in the art.

The result is a DEF control system with an electronic control unit (ECU) 115 which receives signals from the coolant temperature sensor 117 and the reductant temperature sensor 151, and which controls the pump 168, the injector 158 and the heater 130 as a function of the sensed coolant temperature and the sensed reductant temperature. The DEF control system places the DEF system in different states, and keeps the DEF system in each state for at least a minimum amount of time before transitioning to any other state. Different minimum time periods apply to each state. The control system determines whether the reductant fluid DEF could be frozen by monitoring temperatures, such as the coolant temperature. Other vehicle temperatures could be monitored for this purpose as well.

All temperature thresholds may be adjusted or calibrated for different systems. DEF fluid can be heated by engine coolant (heater 130) and/or with electrical heating elements (not shown).

## Claims

1. An engine having an exhaust gas system and a reductant delivery system, the reductant delivery system having a pump for supplying reductant from a reductant tank to an injector which injects the reductant into the exhaust gas and a heater for heating the reductant in the tank, a control system comprising:
a reductant temperature sensor for sensing a temperature of the reductant; and
an electronic control unit receiving signals from the reductant temperature sensor, the electronic control unit controlling the pump, the injector and the heater as a function of the sensed reductant temperature.

2. The control system according to claim 1, wherein:
the ECU turns on the heater to defrost the reductant if the sensed reductant temperature is below a first reductant temperature threshold.

3. The control system according to claim 2, wherein:
the ECU turns off the heater if the sensed reductant temperature is above a second reductant defrost threshold.

4. The control system according to claim 2 or 3, wherein:
the ECU maintains the injector in a disabled state if the sensed reductant temperature remains below a first reductant defrost threshold for at least a certain time period.

5. The control system according to claim 4, wherein:
the ECU generates a tank insufficient heating flag if the sensed reductant temperature remains below a first reductant defrost threshold for at least a certain time period.

6. The control system according to one of the claims 1 to 5, wherein:
after the heater is turned on, the ECU unit keeps the heater 130 on until the reductant temperature stays above a threshold temperature for at least a certain time period.

7. The control system according one of the claims 1 to 6, wherein:
the ECU receives an engine coolant temperature signal from an engine coolant temperature sensor; and
after the ECU determines that the reductant tank should be defrosted, the ECU turns on the heater only after the coolant temperature is higher than a threshold coolant temperature.

8. The control system according one of the claims 1 to 7, wherein:
before turning off the heater, and while the injector is turned off, the ECU keeps the pump on for at least a certain duration to cause recirculation of the reductant.

9. The control system according one of the claims 1 to 8, further comprising:
a coolant temperature sensor for sensing a temperature of engine coolant, the ECU receiving signals from the coolant temperature sensor, and the ECU turning the heater on only when the sensed coolant temperature exceeds a coolant temperature threshold.

10. The control system according one of the claims 1 to 9, wherein:
the ECU controls turning on and off of the heater, and the ECU controls the pump to recirculate the reductant to enhance thawing of the tank.
